# EUROPÄISCHE PATENTSCHRIFT

(11) **EP 1 646 516 B1**
(45) Veröffentlichungstag und Bekanntmachung des Hinweises auf die Patenterteilung: **29.09.2010**
(21) Anmeldenummer: 04766167.3
(22) Anmeldetag: 08.07.2004
(51) Int. Cl.: B60C 23/06

(54) **VERFAHREN ZUR ERKENNUNG DES AM FAHRZEUG INSTALLIERTEN REIFENTYPS**
METHOD FOR IDENTIFYING A TYRE TYPE MOUNTED ON A VEHICLE
PROCEDE POUR IDENTIFIER LE TYPE DE PNEU INSTALLE SUR UN VEHICULE

(30) Priorität: 08.07.2003 DE 10330953
(43) Veröffentlichungstag der Anmeldung: 19.04.2006
(73) Patentinhaber: Continental Teves AG & Co. oHG, 60488 Frankfurt am Main (DE); Continental Aktiengesellschaft, 30165 Hannover (DE)
(72) Erfinder: KÖBE, Andreas, 64625 Bensheim (DE); GRIESSER, Martin, 65760 Eschborn (DE); EDLING, Frank, 65929 Frankfurt (DE); RUNGE, Ines, 60543 Hannover (DE); KLUGE, Stefan, 80823 Garbsen (DE)
(86) Internationale Anmeldenummer: PCT/EP2004/051424
(87) Internationale Veröffentlichungsnummer: WO 2005/005175

(56) Entgegenhaltungen:
- US-A- 5 557 552

## Beschreibung

Die Erfindung betrifft ein Verfahren zur Erkennung des am Fahrzeug installierten Reifentyps gemäß Anspruch 1 sowie ein Computerprogramm gemäß Anspruch 6.

Zur Verbesserung der Sicherheit moderner Kraftfahrzeuge und deren Insassen werden heutzutage vermehrt elektronische Hilfssysteme wie beispielsweise ein Antiblockiersystem (ABS) oder ein elektronisches Stabilitätsprogramm (ESP) eingesetzt. Zur Verbesserung der Regelalgorithmen dieser elektronischen Hilfssysteme ist beispielsweise aus der EP 0 783 983 B1 ein Verfahren bekannt, welches aus den Drehgeschwindigkeiten der Räder des Fahrzeugs erkennt, ob ein Sommer- oder ein Winterreifen am Fahrzeug montiert ist. Abhängig von dem erkannten Reifen (Sommer- oder Winterreifen) werden daraufhin die Regelalgorithmen des ABS-Reglers auf den erkannten Reifen abgestimmt. Sommer- und Winterreifen weisen unterschiedliche Reifeneigenschaften, z. B. Unterschiede in der Profilsteifigkeit, auf, welche sich beispielsweise auf die maximal zu übertragende Fahrzeugverzögerung auswirken können. Die Anpassung des ABS-Reglers an den erkannten Reifen dient daher zur Verbesserung der aktiven Sicherheit.

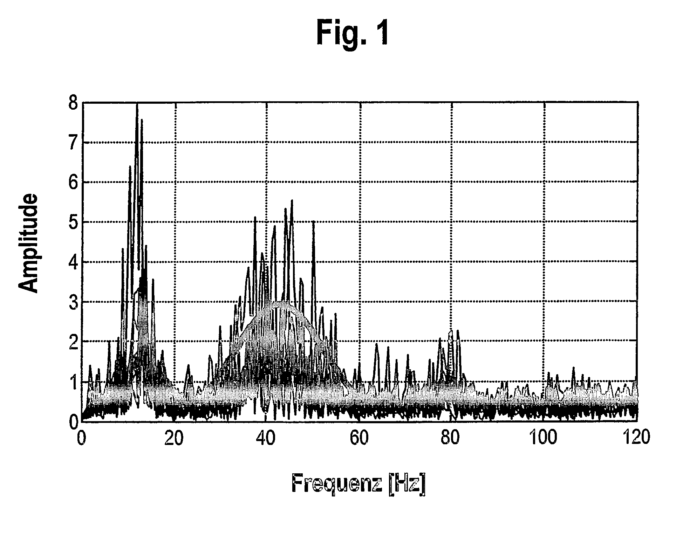

Ferner ist aus der EP 0 578 826 B1 eine Vorrichtung zum Erfassen eines Reifenluftdruckzustands bekannt, welches einen Reifenluftdruckverlust durch Auswertung der Schwingungseigenschaften eines Fahrzeugreifens mittels einer Fourier-Analyse oder ähnlichen Verfahren bestimmt. Hierzu wird die Verschiebung einer Resonanzfrequenz, auch Peak-Frequenz genannt, ausgewertet. In Fig. 1 ist ein typisches Beispiel eines Reifens mit einer ausgeprägten Peak-Frequenz fp bei etwa 40 Hz für einen bestimmten Reifenluftdruck dargestellt. Eine Verschiebung dieser Peak-Frequenz zu höheren bzw. niedrigeren Frequenzen hin wird von der bekannten Vorrichtung als Reifenluftdruckverlust interpretiert.

Die gattungsgemäße US 5,557,552 beschreibt ein Verfahren zum Ermitteln von Reifeneigenschaften, wie Reifendruck und Reifentyp. Der Reifentyp wird aus einer Reifenresonanzfrequenz des Reifens und dem dynamischen Reifenabrollradius bestimmt.

Aufgabe der Erfindung ist, ein anderes Verfahren zur Erkennung des am Fahrzeug installierten Reifentyps bereitzustellen, welches die an dem Fahrzeug installierten Reifentypen aufgrund ihrer Schwingungseigenschaften erkennt.

Diese Aufgabe wird erfindungsgemäß durch das Verfahren nach Anspruch 1 gelöst.

Unter dem Begriff "charakteristische Reifeneigenschaft" soll erfindungsgemäß eine Größe wie z. B. die Druckempfindlichkeit des Abrollumfangs des Reifens, die Druckempfindlichkeit der Peak-Frequenz fp, etc. verstanden werden.

Der Begriff "Peak-Frequenz" soll im folgenden allgemein als Kenngröße für charakteristische Eigenschwingungen des Reifens verstanden werden, wobei neben der eigentlichen Eigenfrequenz z. B. auch die Dämpfung gemeint ist, die sich in Figur 1 als Breite bzw. Form der Ausprägung im Frequenzspektrum um etwa 40 Hz herum zeigt.

Unter dem Begriff "Solldruck des Fahrzeugreifens" soll ein festgelegter Luftdruck des Reifens, wie beispielsweise ein vom Fahrzeughersteller für eine bestimmte Beladung vorgeschriebener Solldruck, verstanden werden. Dieser Solldruck ist u. a. von dem jeweiligen Fahrzeugtyp, der Fahrzeugbeladung und der verwendeten Reifendimensionen abhängig.

Die Durchführung des erfindungsgemäßen Verfahrens erfolgt vorzugsweise nur, wenn der vorliegende Reifenluftdruck mit dem Solldruck des Fahrzeugreifens übereinstimmt.

Vorteilhafterweise erfolgt das Einstellen oder Überprüfen des Solldrucks der Fahrzeugreifen durch den Fahrzeugführer mittels eines Reifenfüllgeräts oder eines Reifenluftdruckmessers.

Vorzugsweiseweise wird durch den Fahrzeugführer, nachdem dieser zuvor den Solldruck der Fahrzeugreifen eingestellt bzw. überprüft hat, eine Auslöseeinrichtung, insbesondere ein Resetknopf, betätigt, welche das erfindungsgemäße Verfahren startet.

Vorteilhafterweise werden die charakteristischen Reifeneigenschaften bei einem vorgegebenen Solldruck des Fahrzeugreifens in einem Kennfeld, in Form einer mathematischen Funktion oder auf ähnliche Weise abgespeichert. Beispielsweise geht aus einem solchen Kennfeld die Peak-Frequenz eines bestimmten Reifentyps mit einer bestimmten Reifengröße bei einem bestimmten Reifendruck hervor. Das Kennfeld kann auch beispielsweise Informationen über die Reifen- bzw. Lufttemperatur oder Korrekturwerte zur Eliminierung von Temperatureinflüssen beinhalten. Dieses Kennfeld kann man sich z. B. als Tabelle oder Diagramm vorstellen, wobei über die Radgeschwindigkeit v und die Peak-Frequenz fp die unterschiedlichen Reifentypen gemäß einer Funktion f(fp, v) aufgetragen sind. Aus diesem Kennfeld kann einerseits direkt die Peak-Frequenz fp bei einer bestimmten Geschwindigkeit v abgelesen bzw. entnommen werden und andererseits kann auch eine Peak-Frequenz fp bei einer bestimmten Radgeschwindigkeit v aus der Funktion f(fp, v) ermittelt werden, z. B. per Interpolation oder Betrachtung der Steigung. Der Verlauf der Peak-Frequenz fp über die Radgeschwindigkeit v gibt somit einen direkten Aufschluss über den vorliegenden Reifentyp. Ein solches Kennfeld muss fahrzeugspezifisch ermittelt werden.

Die mindestens eine charakteristische Reifeneigenschaft wird bevorzugt auch anderen Fahrzeugsystemen wie beispielsweise einem Antiblockiersystem (ABS), einem Fahrstabilitätsprogramm (ESP), einem indirekt messenden Reifendruckkontrollsystem (DDS) oder anderen bekannten Systemen zur Verfügung gestellt.

Dieses Verfahren zur Erkennung des Reifentyps ist auch ganz besonders geeignet zur Charakterisierung der Reifen für ein Reifendruckkontrollsystem welches auf Basis der druckbedingten Änderung des Reifenabrollumfangs U oder auf Basis der druckabhängigen Peak-Frequenz fp arbeitet. Für diese Reifendruckkontrollsysteme stellt sich das Problem, das die Druckempfindlichkeit des Reifenabrollumfangs dU/dp bzw. die Druckempfindlichkeit der Peak-Frequenz dfp/dp stark vom Reifen abhängt. Zu beachten ist hierbei, dass die den Reifen charakterisierende Peak-Frequenz fp geschwindigkeitsabhängig ist. Es ist also sicherzustellen, dass die Bestimmung der Peak-Frequenz fp jeweils bei der selben Geschwindigkeit oder innerhalb desselben Geschwindigkeitsbereichs erfolgt. Die Peak-Frequenz hängt außerdem vom Radmoment ab, deshalb wird zur Bestimmung der Peak-Frequenz nur ein eingeschränkter Radmomentenbereich für die jeweilige Radgeschwindigkeit zugelassen oder die Peak-Frequenz wird grundsätzlich nur unter Berücksichtigung des Radmoments bestimmt. Da das betrachtete Fahrzeug nicht nur mit identischen Reifen an allen Rädern ausgestattet sein kann, können sich u. U. auch unterschiedliche Peak-Frequenzen ergeben.

Weitere bevorzugte Ausführungsformen ergeben sich aus den Unteransprüchen und der nachfolgenden Beschreibung von einigen Ausführungsbeispiele an Hand der Figuren.

Es zeigen
- Fig. 1: ein bekanntes Frequenzspektrum eines Reifens,
- Fig. 2: unterschiedliche Reifentypen/-dimensionen mit unter- schiedlichen Peak-Frequenzen bei einer betrachteten Geschwindigkeit, und
- Fig. 3: die Abhängigkeit der Druckempfindlichkeit von der Peak-Frequenz bei einer betrachteten Geschwindigkeit.

In Fig. 1 ist ein typisches Frequenzspektrum eines Reifens dargestellt. Auf der Abszisse ist die Frequenz in Hertz aufgetragen und auf der Ordinate die Amplitude in einer willkürlichen Einheit. In dem gezeigten Beispiel sieht man eine ausgeprägte Peak-Frequenz fp bei etwa 40 Hz. Das in Fig. 1 dargestellte Frequenzspektrum wird auf bekannte Weise aus dem Signal eines Sensors z. B. einem am Fahrzeug vorhandenen ABS-Sensor, welcher die Dreheigenschaft (z. B. Drehgeschwindigkeit) des Fahrzeugrads ermittelt, mittels einer Fourier-Analyse bestimmt. Hierbei ergibt sich eine ausgeprägte Peak-Frequenz fp bei etwa 40 Hz. Die Lage der Peak-Frequenz fp ist hierbei abhängig von den Reifeneigenschaften, wie z. B. dem Reifendruck, und der Geschwindigkeit des Fahrzeugs.

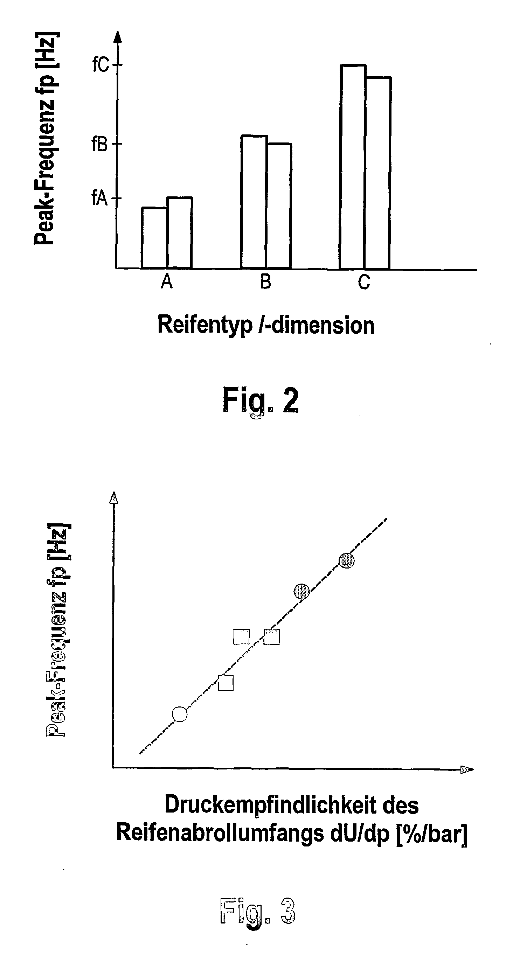

Das Diagramm in Fig. 2 stellt Pcak-Frequensen für unterschiedliche Reifentypen/-dimensionen A, B, C dar, wobei diese jeweils unterschiedliche Peak-Frequenzen fA, fB, fC aufweisen. Die gezeigte Abhängigkeit zwischen dem Reifentyp und der Peak-Frequenz ist unter anderem geschwindigkeitsabhängig, deshalb gilt das Diagramm nur für eine betrachtete Geschwindigkeit bei einem bestimmten Fahrzeug. Bei anderen Geschwindigkeiten oder anderen Fahrzeugen kann diese Abhängigkeit anders aussehen. Es hat sich gezeigt, dass die Lage der Peak-Frequenz fp geeignet ist zur Bestimmung des vorliegenden Reifentyps. Die Peak-Frequenzen können hierbei als feste Werte (z. B. 40 Hz) oder als Wertebereiche (z. B. 38 Hz - 42 Hz) definiert sein, um z. B. auch vorhandene Herstellungstoleranzen der Reifen zu berücksichtigen. Der ermittelte Reifentyp kann an weitere Fahrzeugsysteme wie z. B. ABS, ESP weitergegeben werden um dort zur Anpassung von Regelalgorithmen verwendet zu werden.

In Fig. 3 ist die Abhängigkeit bzw. Korrelation zwischen der Lage der Peak-Frequenz fp und der Druckempfindlichkeit des Reifenabrollumfangs dU/dp bei einer betrachteten Geschwindigkeit für das betrachtete Fahrzeug dargestellt. Peak-Frequenzen mit einer höheren Frequenz weisen auch eine höhere Druckempfindlichkeit des Reifenabrollumfangs dU/dp auf. Diese Erkenntnis wird bei dem erfindungsgemäßen Verfahren berücksichtigt um die Erkennungsschwellen für einen Reifenluftdruckverlust festzulegen. Bei bisherigen Reifendruckkontrollsystemen wurden die Erkennungsschwellen unabhängig von den Reifeneigenschaften festgelegt, was bei manchen Systemen je nach Auslegung zu Fehlwarnungen oder ausbleibenden Warnungen führte. Die Berücksichtigung der Reifeneigenschaften bei einem Reifendruckkontrollsystem dient somit zum verbesserten Erkennen eines Reifendruckverlustes und zwar bei nahezu gleichen Druckschwellen für alle Reifen. Hierbei ist die Abhängigkeit zwischen der Peak-Frequenz fp und der Druckempfindlichkeit des Abrollumfangs dU/dp z. B. in einem Kennfeld oder in Form einer mathematischen Funktion abgespeichert.

Im Folgenden wird das erfindungsgemäße Verfahren in einzelnen Schritten vorgestellt.
Schritt 1: Einstellen des Solldrucks (empfohlener Reifenluftdruck) der Fahrzeugreifen und Betätigen eines Resetknopfs zum Starten des erfindungsgemäßen Verfahrens.
Schritt 2: Bestimmung der Peak-Frequenz fp bei Solldruck der einzelnen Reifen unter Berücksichtigung der Radgeschwindigkeit und des Radmoments aus dem Frequenzspektrum der Fourier-Analyse auf an sich bekannte Weise.
Schritt 3: Bestimmung der charakteristischen Reifeneigenschaften wie z. B. die Druckempfindlichkeit des Reifenabrollumfanges oder die Druckempfindlichkeit der Peak-Frequenz fp aus einem abgelegten Kennfeld (siehe Fig. 3).

Für die Verwendung des erfindungsgemäßen Verfahrens in anderen Fahrzeugsystemen (z. B. ABS, ESP, DDS) können noch die folgenden Schritte notwendig sein.
Schritt 4: Auswahl der verwendeten Erkennungsschwellen/Warnschwellen in Abhängigkeit von z. B. der Druckempfindlichkeit des Reifenabrollumfangs oder der Druckempfindlichkeit der Peak-Frequenz fp.
Schritt 5: Übermittlung der geschwindigkeitsabhängigen Peak-Frequenz fp bei Solldruck und der Erkennungsschwellen/Warnschwellen an ein nachgeschaltetes System z. B. Reifendruckkontrollsystem (DDS), ABS, ESP, etc.

Grundsätzlich könnte die Druckempfindlichkeit des Abrollumfangs oder die Druckempfindlichkeit der Peak-Frequenz über korrelierende Schwingungseigenschaften des Reifens ermittelt werden, die auch auf andere Weise ausgewertet werden können, z. B. über Auswertung einer charakteristischen Radbeschleunigung.

## Patentansprüche

1. Verfahren zur Erkennung des am Fahrzeugs installierten Reifentyps, wobei mindestens eine charakteristische Reifeneigenschaft, welche den am Fahrzeug installieren Reifentyp beschreibt, aus der Peak-Frequenz fp des Frequenzspektrums mindestens eines Fahrzeugreifens bestimmt wird, **dadurch gekennzeichnet, dass**
die Peak-Frequenz fp bei einem festgelegten Solldruck des Fahrzeugreifens ermittelt wird.

2. Verfahren gemäß Anspruch 1, **dadurch gekennzeichnet, dass** die Peak-Frequenz fp aus dem Frequenzspektrum mittels eines numerischen Analyseverfahrens, insbesondere nach dem Prinzip der Fourier-Analyse, bestimmt wird.

3. Verfahren nach Anspruch 1 oder 2, **dadurch gekennzeichnet, dass** die Peak-Frequenz fp bei einer bestimmten Radgeschwindigkeit oder innerhalb eines bestimmten Radgeschwindigkeitsbereichs ermittelt wird.

4. Verfahren nach mindestens einem der Ansprüche 1 bis 3,
**dadurch gekennzeichnet, dass** die charakteristische Reifeneigenschaft in einem Kennfeld oder in Form einer mathematische Funktion abgespeichert ist, welches die Korrelation zwischen der Peak-Frequenz fp der charakteristischen Reifeneigenschaft unter Berücksichtigung der Radgeschwindigkeit beschreibt.

5. Verfahren nach mindestens einem der Ansprüche 1 bis 4,
**dadurch gekennzeichnet, dass** die Peak-Frequenz fp und/oder die mindestens eine charakteristische Reifeneigenschaft anderen Fahrzeugsystemen, wie insbesondere einem Antiblockiersystem (ABS), und/oder einem elektronischen Stabilitätsprogramm (ESP) und/oder einem Reifendruckkontrollsystem (DDS), zugeführt werden.

6. Computerprogrammprodukt, **dadurch gekennzeichnet, dass** dieses einen Algorithmus definiert, welcher ein Verfahren gemäß mindestens einem der Ansprüche 1 bis 5 umfasst.

## Claims

1. Method for identifying the tyre type installed on the vehicle, wherein at least one characteristic tyre property which describes the tyre type installed on the vehicle is determined from the peak frequency fp of the frequency spectrum of at least one vehicle tyre,
**characterized in that**
the peak frequency fp is determined at a defined setpoint pressure of the vehicle tyre.

2. Method according to Claim 1, **characterized in that** the peak frequency fp is determined from the frequency spectrum by means of a numerical analysis method, in particular according to the Fourier analysis principle.

3. Method according to Claim 1 or 2, **characterized in that** the peak frequency fp is determined at a specific wheel speed or within a specific wheel speed range.

4. Method according to at least one of Claims 1 to 3, **characterized in that** the characteristic tyre property is stored in a characteristic diagram or in the form of a mathematical function which describes the correlation between the peak frequency fp of the characteristic tyre property taking into account the wheel speed.

5. Method according to at least one of Claims 1 to 4, **characterized in that** the peak frequency fp and/or the at least one characteristic tyre property are fed to other vehicle systems such as, in particular, an antilock brake system (ABS) and/or an electronic stability program (ESP) and/or a tyre pressure-monitoring system (DDS).

6. Computer program product **characterized in that** said product defines an algorithm which comprises a method according to at least one of Claims 1 to 5.

## Revendications

1. Procédé de détection du type de bandage de roue installé sur un véhicule, dans lequel au moins une propriété caractéristique du bandage de roue qui décrit le type de bandage de roue installé sur le véhicule est déterminée à partir de la fréquence de pointe fp du spectre de fréquences du bandage pneumatique d'au moins une roue du véhicule,
**caractérisé en ce que**
la fréquence de point fp est déterminée à une pression de consigne définie du bandage pneumatique de roue du véhicule.

2. Procédé selon la revendication 1, **caractérisé en ce que** la fréquence de pointe fp est déterminée à partir du spectre de fréquences au moyen d'un procédé d'analyse numérique et en particulier selon le principe de l'analyse de Fourier.

3. Procédé selon les revendications 1 ou 2, **caractérisé en ce que** la fréquence de pointe fp est déterminée à une vitesse définie de la roue ou à l'intérieur d'une plage définie de vitesses de la roue.

4. Procédé selon au moins l'une des revendications 1 à 3, **caractérisé en ce que** la propriété caractéristique du bandage pneumatique de roue est conservée en mémoire dans un champ de caractéristiques ou sous la forme d'une fonction mathématique qui décrit la corrélation entre la fréquence de pointe fp de la propriété caractéristique du bandage pneumatique de roue et la vitesse de la roue.

5. Procédé selon au moins l'une des revendications 1 à 4, **caractérisé en ce que** la fréquence de pointe fp et/ou la ou les propriétés caractéristiques des bandages de roue sont amenées à d'autres systèmes du véhicule, en particulier un système antiblocage (ABS), un programme électronique de stabilisation (ESP) et/ou un système (DDS) de contrôle de la pression des bandages pneumatiques de roue.

6. Produit de programme informatique **caractérisé en ce qu'**il définit un algorithme qui comporte un procédé selon au moins l'une des revendications 1 à 5.
